(19) Europäisches Patentamt
European Patent Office
Office européen des brevets

(11) **EP 3 838 986 A1**

(12) **EUROPEAN PATENT APPLICATION**

(43) Date of publication:
**23.06.2021 Bulletin 2021/25**

(51) Int Cl.:
***C08L 23/12*** *(2006.01)*

(21) Application number: **19218381.2**

(22) Date of filing: **20.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Total Research & Technology Feluy**
**7181 Seneffe (BE)**

(72) Inventors:
• **ROUSSEAUX, Dimitri**
**1400 NIVELLES (BE)**

• **BOUKALIDIS, Cristo**
**7332 SIRAULT (BE)**
• **LHOST, Olivier**
**7021 HAVRE (BE)**

(74) Representative: **Garcia Martin, Margarita**
**Total Research & Technology Feluy**
**Patent Department**
**Zone Industrielle Feluy C**
**7181 Seneffe (BE)**

(54) **POLYPROPYLENE-BASED COMPOSITE MATERIAL COMPRISING ATACTIC POLYPROPYLENE AS ADDITIVE AND CONDUCTIVE ARTICLE MADE OF**

(57) The disclosure relates to a composite material comprising polypropylene and carbon particles, wherein at least at least 0.08 wt.% based on the total weight of the composite material, of an atactic polypropylene resin is added as additive in order to improve the electrical properties and to allow a lower content of carbon particles to be added in order to produce a conductive article.

EP 3 838 986 A1

**Description**

**Field of the disclosure**

The present disclosure relates to a process for the preparation of polypropylene-based conductive articles and to the articles obtained and obtainable by said process.

**Background of the disclosure**

Polypropylene is today widely used in the industry. The main reasons are easy processing in different transformation techniques and a mix of good mechanical properties in the temperature range - 20 °C to 100 °C.

If conductive articles are required, the polypropylene can be then blended with carbon particles such as carbon nanotubes (CNT) to form a composite material. The production of such composite material is described for example in WO2016/142544.

Several methods can be used when producing such conductive articles, such as extrusion, compression-moulding or injection moulding. CNTs are affected by shear during these production processes. The higher the shear, the higher the content of CNT is required to arrive at similar electrical properties.

As a matter of example, in case of sheet extrusion, the PP-CNT material used to form the sheet needs to contain more than 4 wt.% of CNT in order to produce a conductive article with a surface resistance of the article has a surface resistance of less than $1.10^7$ Ohm as measured according to IEC 61340-4-1 with a SRM110 meter. The amount of CNT is therefore too high leading to a product that is too brittle and too expensive.

There is, therefore, a need to provide a composite material for the production of articles by extrusion having good electrical properties together with a content of carbon particles such as CNT being as low as possible; such properties being sought for in spite of the existence of a certain degree of shear during processing.

**Summary of the disclosure**

It is, therefore, an object of the present disclosure to provide a composite material and a process to produce such a composite material suitable for the production of conductive articles such as article obtained from a process comprising a step of sheet extrusion, wherein the articles are conductive and comprise a low content of carbon particles.

According to a first aspect, the disclosure provides a composite material comprising:

- from 80 wt.% to 99 wt.% based on the total weight of the composite material, of a polypropylene composition comprising a first crystalline polypropylene resin and an optional second crystalline polypropylene resin;
- from 0.2 to 10 wt.% of carbon particles based on the total weight of the composite material and as determined according to ISO 11358, wherein the carbon particles are selected from nanographene, carbon nanotubes or any combination thereof;

the composite material is remarkable in that it further comprises at least 0.08 wt.% based on the total weight of the composite material, of an atactic polypropylene resin.

Surprisingly, it has been found by the inventors, that adding a very low amount of atactic polypropylene resin of at least 0.08 wt.% to the overall composition, allows to achieve the targeted electrical properties with a lower content of carbon particles, for example, a lower content of CNT, compared to a similar composite material that is devoid of atactic polypropylene resin. The atactic polypropylene resin is used as an additive. For example, as demonstrated in the examples, it is possible to obtain a conductive article having a surface resistance of less than $1.10^7$ Ohm with a content of 2.5 wt.% of CNT. In prior art, a content of more than 4 wt.% of CNT was needed to achieve the same result.

One or more of the following can be used to further define the atactic polypropylene resin of the composite material:

- The atactic polypropylene resin has a density ranging from 0.850 to 0.900 $g/cm^3$ as determined according to ISO 1183 at a temperature of 23 °C.
- The atactic polypropylene resin has a hexane content of at most 0.2 wt.% based on the total weight of the atactic polypropylene, the hexane content being determined by TDA-GC analysis.
- The atactic polypropylene resin has an ash content of at most 4.5 wt.% based on the total weight of the atactic polypropylene.
- The atactic polypropylene resin is present at a content ranging from 0.08 to 2.0 wt.% based on the total weight of the composite material; for example, from 0.09 to 1.5 wt.%; for example, from 0.1 to 1.0 wt.%.
- The atactic polypropylene resin is soluble in hexane at a temperature of 65 °C or more.

- The atactic polypropylene has a melting enthalpy lower than about 40 J/g, for example, lower than 30 J/g and for example lower than 20 J/g.
- The atactic polypropylene has a melting enthalpy ranging from 0 to 39 J/g; for example, from 1 to 35 J/g; for example, from 5 to 25 J/g; for example, from 8 to 20 J/g.

In an example, the polypropylene composition is present in the composite material at a content ranging from 85 to 99 wt.% based on the total weight of the composite material; for example, ranging from 90 to 98 wt.%.

One or more of the following can be used to further define the first crystalline polypropylene resin of the composite material:

- The first crystalline polypropylene resin is selected from isotactic polypropylene resin and a syndiotactic polypropylene resin; for example, the first crystalline polypropylene resin is an isotactic polypropylene resin.
- The first crystalline polypropylene resin is selected from virgin polypropylene resin, a polypropylene post-consumer resin and a blend of a virgin polypropylene resin and a polypropylene post-consumer resin.
- The first crystalline polypropylene resin has a melt index MI2 ranging from 5 to 30 g/10 min as determined according to ISO 1133 at 230 °C under a load of 2.16 kg; for example, from 6 to 25 g/10 min; for example, from 7 to 20 g/10 min; for example, from 8 to 18 g/10 min.
- The first crystalline polypropylene resin is present in the composite material at a content ranging from 20 to 99 wt.% based on the total weight of the composite material; for example, from 40 to 90 wt.%; for example, from 50 to 85 wt.%; for example, from 60 to 80 wt.%.
- The first crystalline polypropylene resin is selected from a propylene homopolymer, a copolymer of propylene with one or more comonomer selected from ethylene and $C_4$-$C_{10}$ alpha-olefins, an heterophasic polypropylene and any mixture thereof.
- The first crystalline polypropylene is an heterophasic polypropylene consisting of:

  i. from 60 to 95 wt.% based on the total weight of the heterophasic polypropylene of a polypropylene-based matrix selected from a homopolymer and/or a copolymer of propylene with one or more comonomer selected from ethylene and $C_4$-$C_{10}$ alpha-olefins; and
  ii. from 40 to 5 wt.% based on the total weight of the heterophasic polypropylene of a dispersed ethylene-alpha-olefin copolymer;
  for example, the alpha-olefin in the ethylene-alpha-olefin copolymer is selected from the group of alpha-olefins having from 3 to 8 carbon atoms and/or the alpha-olefin in the ethylene-alpha-olefin copolymer is in the range of 25 to 70 wt.% based on the total weight of the ethylene-alpha-olefin copolymer.

One or more of the following can be used to further define the second crystalline polypropylene resin of the composite material:

- The second crystalline polypropylene resin is selected from isotactic polypropylene resin and a syndiotactic polypropylene resin; for example, the second crystalline polypropylene resin is an isotactic polypropylene resin.
- the second crystalline polypropylene resin is selected from a virgin polypropylene resin, a polypropylene post-consumer resin, and a blend of a virgin polypropylene resin and a polypropylene post-consumer resin.
- The second crystalline polypropylene resin is selected from a propylene homopolymer and/or a copolymer of propylene with one or more comonomer selected from ethylene and $C_4$-$C_{10}$ alpha-olefins; for example, the second crystalline polypropylene resin is a propylene homopolymer.
- The second crystalline polypropylene resin is a metallocene-catalyzed polypropylene and has a molecular weight distribution ranging from 2.0 to 4.5.
- The second crystalline polypropylene resin has a melt index MI2 ranging from 80 to 250 g/10 min as determined according to ISO 1133 at 230 °C under a load of 2.16 kg; for example, from 90 to 200 g/10 min; for example, from 100 to 180 g/10 min; for example, from 120 to 160 g/10 min.
- The second crystalline polypropylene resin is present in the composite material in a content ranging from 5 to 40 wt.% based on the total weight of the composite material, for example, from 10 to 30 wt.%; for example, from 15 to 25 wt.% based on the total weight of the composite material.

One or more of the following can be used to further define the carbon particles of the composite material:

- The carbon particles are carbon nanotubes.
- The composite material comprises from 1.0 to 8.0 wt.% of carbon particles based on the total weight of the composite material as determined according to ISO 11358, for example, from 2.0 to 6.0 wt.%, for example, from 2.5 to 5.0 wt.%.

- The carbon particles are carbon nanotubes and the composite material comprises from 1.0 to 4.0 wt.% of carbon nanotubes based on the total weight of the composite material as determined according to ISO 11358, for example, from 1.2 to 3.7 wt.%; for example, 1.5 to 3.5 wt.%.

According to an example, the carbon particles are provided in the form of a masterbatch in the process of production of the composite material, wherein the masterbatch comprises the carbon particles and the second crystalline polypropylene resin.

The polypropylene composition may comprise one or more polypropylene post-consumer resins; for example, polypropylene composition comprises from 5 to 100 wt.% of polypropylene post-consumer resin based on the total weight of the polypropylene composition; for example, from 20 to 95 wt.%; for example, from 40 to 90 wt.%, for example, from 50 to 85 wt.%; for example, from 60 to 80 wt.%.

In an example, the first crystalline polypropylene resin:

- comprises from 20 to 95 wt.% of polypropylene post-consumer resin based on the total weight of the first crystalline polypropylene resin; for example, from 40 to 90 wt.%; for example, from 50 to 85 wt.%; for example, from 60 to 80 wt.%; and/or
- is or comprises a post-consumer resin; wherein the polypropylene post-consumer resin has an MI2 ranging from 5 to 30 g/10 min as determined according to ISO 1133 at 230 °C under a load of 2.16 kg; for example, from 7 to 20 g/10 min; and/or
- is or comprises a post-consumer resin; wherein the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

In an example, wherein the composition comprises a second crystalline polypropylene resin, the one or more of the following can be used:

- the second crystalline polypropylene resin comprises from 20 to 95 wt.% of polypropylene post-consumer resin based on the total weight of the second crystalline polypropylene resin; for example, from 40 to 90 wt.%; for example, from 50 to 85 wt.%; for example, from 60 to 80 wt.%; and/or
- the second crystalline polypropylene resin is or comprises a post-consumer resin; and the polypropylene post-consumer resin has an MI2 ranging from 80 to 250 g/10 min as determined according to ISO 1133 at 230 °C under a load of 2.16 kg; and/or
- the second crystalline polypropylene resin is or comprises a post-consumer resin; and the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

According to a second aspect, the disclosure provides a process to produce a composite material according to the first aspect, remarkable in that it comprises the steps of:

a) providing a first crystalline polypropylene resin having a melt index MI2 ranging from 5 to 30 g/10 min as determined according to ISO 1133 at 230 °C under a load of 2.16 kg;
b) providing a carbon particles masterbatch comprising a blend of:

- at least 5.0 wt.% of carbon particles as determined according to ISO 11358 and based on the total weight of said masterbatch; wherein the carbon particles are selected from nanographene, carbon nanotubes or any combination thereof; and
- a second crystalline polypropylene resin having an MI2 ranging from 80 to 250 g/10 min as determined according to ISO 1133 at 230 °C under a load of 2.16 kg;

c) providing an atactic polypropylene resin;
d) dry blending the components to obtain a composite material wherein the composite material comprises at least 0.08 wt.% based on the total weight of the composite material of atactic polypropylene resin, and from 0.2 to 10 wt.% based on the total weight of the composite material of carbon particles.

For example, at least 60 wt.% of the carbon particles are carbon nanotubes which have an average length of 1.3 μm or more as determined by transmission electron microscopy before being blended with the second crystalline polypropylene resin.

According to a third aspect, the disclosure provides a process to produce a composite material according to the first aspect, remarkable in that it comprises the steps of:

a) providing a first crystalline polypropylene resin having a melt index MI2 ranging from 5 to 30 g/10 min as determined according to ISO 1133 at 230 °C under a load of 2.16 kg;

b) providing a carbon particles-PP masterbatch comprising a blend of:

- at least 5.0 wt.% of carbon particles as determined according to ISO 11358 and based on the total weight of said masterbatch; wherein the carbon particles are selected from nanographene, carbon nanotubes or any combination thereof;
- a second crystalline polypropylene resin having an MI2 ranging from 80 to 250 g/10 min as determined according to ISO 1133 at 230 °C under a load of 2.16 kg; and
- from 1.0 wt.% to 20 wt.% of an atactic polypropylene resin;

d) dry blending the components to obtain a composite material wherein the composite material comprises at least 0.08 wt.% based on the total weight of the composite material of the atactic polypropylene resin, and from 0.2 to 10 wt.% of carbon particles based on the total weight of the composite material.

For example, at least 60 wt.% of the carbon particles are carbon nanotubes which have an average length of 1.3 $\mu$m or more as determined by transmission electron microscopy before being blended with the second crystalline polypropylene resin.

In a fourth aspect, the disclosure provides a masterbatch for the production of a composite material according to the first aspect and/or for use in a process according to the third aspect; remarkable in the masterbatch comprises a blend of:

- at least 5.0 wt.% of carbon particles as determined according to ISO 11358 and based on the total weight of said masterbatch; wherein the carbon particles are selected from nanographene, carbon nanotubes or any combination thereof;
- a second crystalline polypropylene resin having an MI2 ranging from 80 to 250 g/10 min as determined according to ISO 1133 at 230 °C under a load of 2.16 kg; and
- from 1.0 wt.% to 20 wt.% of an atactic polypropylene resin based on the total weight of the masterbatch;

with preference, the second crystalline polypropylene resin is a propylene homopolymer

For example, at least 60 wt.% of the carbon particles are carbon nanotubes which have an average length of 1.3 $\mu$m or more as determined by transmission electron microscopy before being blended with the second crystalline polypropylene resin.

One or more of the following can be used to better disclose the disclosure according to any one of the second, the third and the fourth aspect:

- The carbon particles are CNT and the composite material comprises from 1.0 to 4.0 wt.% of carbon particles based on the total weight of the composite material as determined according to ISO 11358; for example, from 1.2 to 3.7 wt.%; for example, from 1.5 to 3.5 wt.%.
- The masterbatch is produced by blending together a second polypropylene resin having a melting temperature Tm as measured according to ISO 3146, carbon particles, and optional processing aids, in an extruder comprising a transport zone and a melting zone, maintained at a temperature comprised between Tm + 1 °C and Tm + 50 °C; for example, comprised between Tm + 5 °C and Tm + 30 °C.
- The masterbatch further comprises from 0.01 to 4.0 wt.% of a processing aid as based on the total weight of the masterbatch, said processing aid is selected from fluoroelastomers, waxes, tristearin, erucyl amide, oleic acid amide, ethylene-acrylic acid copolymer, ethylene-vinyl acetate copolymer, cetyl trimethyl ammonium bromide, polysiloxanes, oleamide, zinc stearate, stearamide, behenamide, oleyl palmitamide, ethylene bis-oleamide, ethylene bis(stearamide) (EBS) and any mixture thereof.

According to a fifth aspect, the disclosure provides a conductive article produced from the composite material according to the first aspect, or obtain or from the composite material obtained from the process according to the second or the third aspect.

For example, the conductive article is produced by a process selected from extrusion, injection, co-injection moulding, blow moulding, and thermoforming.

In an example, the conductive article has a surface resistance of at most $1.10^7$ Ohm as measured according to IEC 61340-4-1 with an SRM110 meter; for example, of at most $5.10^6$ Ohm.

According to a sixth aspect, the disclosure provides a process to produce a conductive article according to the fifth aspect, remarkable in that it comprises the steps of:

- producing a composite material according to the process of the second aspect or of the third aspect,
- forming a conductive article by extrusion or injection of the composite material;

for example, the step of dry blending the components to obtain a composite material and the step forming a conductive article are conducted simultaneously in a single step.

According to a seventh aspect, the disclosure provides the use of atactic polypropylene resin in a process to produce a composite material comprising polypropylene and carbon particles, or in a process to produce a conductive article made from a composite material comprising polypropylene and carbon particles, wherein the carbon particles are selected from nanographene, carbon nanotubes or any combination thereof; the use being remarkable in that the content of the atactic polypropylene resin is ranging from 0.08 to 2.0 wt.% based on the total weight of the composite material; for example, the composite material comprises from 0.2 to 10 wt.% of carbon particles as determined according to ISO 11358.

For example, the process to produce a composite material is according to the second aspect or to the third aspect and/or the process to produce a conductive article made from a composite material comprising polypropylene and carbon particles is according to the sixth aspect.

According to an eighth aspect, the disclosure provides a process to produce a masterbatch according to the fourth aspect; remarkable in that it comprises the steps of:

- providing carbon nanotubes,
- providing an atactic polypropylene,
- providing a second crystalline polypropylene resin having a melting temperature, Tm, measured according to ISO 3146, and wherein said second crystalline polypropylene resin has a melt index MI2 ranging from 80 to 250 g/10 min as determined according to ISO 1133 at 230 °C under a load of 2.16 kg,
- blending together the components by extrusion in an extruder comprising a transport zone and a melting zone maintained at a temperature comprised between Tm + 1 °C and Tm + 50 °C; for example, between Tm + 5 °C and Tm + 30 °C.

For example, at least 60 wt.% of the carbon particles are carbon nanotubes which have an average length of 1.3 $\mu$m or more as determined by transmission electron microscopy before being blended with the second crystalline polypropylene resin.

According to a ninth aspect, the disclosure provides the use of atactic polypropylene resin in a process to produce a masterbatch comprising polypropylene and carbon particles wherein the carbon particles are selected from nanographene, carbon nanotubes or any combination thereof; the use being remarkable in that the content of the atactic polypropylene resin is ranging from 1.0 wt.% to 20 wt.% of an atactic polypropylene resin based on the total weight of the masterbatch; for example, the masterbatch comprises at least 5.0 wt.% of carbon particles as determined according to ISO 11358 and based on the total weight of said masterbatch.

For example, the process to produce a masterbatch is according to the eighth and/or the masterbatch is according to the fourth aspect.

**Detailed description of the disclosure**

For the purpose of the disclosure the following definitions are given:
As used herein, a "polymer" is a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, e.g. terpolymers, tetrapolymers, etc.

As used herein, "blend", "polymer blend" and like terms refer to a composition of two or more compounds, for example, two or more polymers or one polymer with at least one other compound.

As used herein, the term "melt blending" involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single screw, multiple screws, intermeshing co-rotating or counter-rotating screws, non-intermeshing co-rotating or counter-rotating screws, reciprocating screws, screws with pins, barrels with pins, rolls, rams, helical rotors, or combinations comprising at least one of the foregoing.

As used herein the terms "polypropylene" (PP) and "propylene polymer" may be used synonymously. The term "polypropylene" encompasses homopolypropylene as well as copolymers of propylene which can be derived from propylene and a comonomer such as one or more selected from the group consisting of $C_2$ or $C_4$-$C_{20}$ alpha-olefins, such as ethylene, 1-butene, 1-pentene, 1-hexene, 1-octene.

The term "polypropylene resin" as used herein refers to polypropylene fluff or powder that is extruded, and/or melted and/or pelletized and can be produced through compounding and homogenizing of the polypropylene resin as taught herein, for instance, with mixing and/or extruder equipment. As used herein, the term "polypropylene" may be used as a shorthand for "polypropylene resin".

The term "fluff" or "powder" as used herein refers to polypropylene material with the hard catalyst particle at the core of each grain and is defined as the polymer material after it exits the polymerization reactor (or the final polymerization reactor in the case of multiple reactors connected in series).

Under normal production conditions in a plant, it is expected that the melt index (MI2, HLMI, MI5) will be different for the fluff than for the polypropylene resin. Under normal production conditions in a plant, it is expected that the density will be slightly different for the fluff than for the polypropylene resin. Unless otherwise indicated, density and melt index for the polypropylene resin refer to the density and melt index as measured on the polypropylene resin as defined above. The density of the polypropylene resin refers to the polymer density as such, not including additives such as for example pigments unless otherwise stated.

The term "carbon particles" as used herein encompasses carbon nanotubes and nanographene but excludes carbon fibres.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

In this application "ash" means aluminium as well as residues of catalyst, cocatalyst or any additive to make propylene polymers, such as titanium and silicium derivatives.

Polypropylenes having a low ash content are of interest in applications requiring very clean propylene polymers, for example as dielectric material in capacitors.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

As used herein, the term "masterbatch" refers to concentrates of active material (such as the carbon particles, for example the carbon nanotubes) in a polymer, which is intended to be subsequently incorporated into another polymer miscible with the polymer already contained in the masterbatches.

In the present application, carbon nanotubes will be referred to as CNT.

The particular features, structures, characteristics or embodiments may be combined in any suitable manner, as would be apparent to a person skilled in the art from this disclosure, in one or more examples.

The composite material and the process to produce the composite material.

The disclosure provides composite material comprising:

- from 80 to 99 wt.% based on the total weight of the composite material, of a polypropylene composition comprising a first crystalline polypropylene resin and an optional second crystalline polypropylene resin;
- from 0.2 to 10 wt.% of carbon particles as determined according to ISO 11358, wherein the carbon particles are selected from nanographene, carbon nanotubes or any combination thereof;

the composite material is remarkable in that it further comprises at least 0.08 wt.% based on the total weight of the composite material, of an atactic polypropylene resin.

In an example wherein the carbon particles are provided without the use of a masterbatch, the composite material is produced according to a process comprising the steps of:

a) providing a first crystalline polypropylene resin having a melt index MI2 ranging from 5 to 30 g/10 min as determined according to ISO 1133 at 230 °C under a load of 2.16 kg;
b) providing from 0.2 to 10 wt.% based on the total weight of the composite material of carbon particles;
c) providing an atactic polypropylene resin; and
d) dry blending the components to obtain a composite material wherein the composite material comprises at least 0.08 wt.% based on the total weight of the composite material of atactic polypropylene resin.

In an example wherein the carbon particles are provided by way of a masterbatch, the composite material is produced according to a process comprising the steps of:

> a) providing a first crystalline polypropylene resin having a melt index MI2 ranging from 5 to 30 g/10 min as determined according to ISO 1133 at 230 °C under a load of 2.16 kg;
> b) providing a carbon particles-PP masterbatch comprising a blend of:
>
> - at least 5.0 wt.% of carbon particles as determined according to ISO 11358 and based on the total weight of said masterbatch; wherein the carbon particles are selected from nanographene, carbon nanotubes or any combination thereof; and
> - a second crystalline polypropylene resin having an MI2 ranging from 80 to 250 g/10 min as determined according to ISO 1133 at 230 °C under a load of 2.16 kg;
>
> c) providing an atactic polypropylene resin; and
> d) dry blending the components to obtain a composite material wherein the composite material comprises at least 0.08 wt.% based on the total weight of the composite material of atactic polypropylene resin, and from 0.2 to 10 wt.% based on the total weight of the composite material of carbon particles.

In an example wherein both the atactic polypropylene and the carbon particles are provided by way of a common masterbatch the composite material is produced according to a process comprising the steps of:

> a) providing a first crystalline polypropylene resin having a melt index MI2 ranging from 5 to 30 g/10 min as determined according to ISO 1133 at 230 °C under a load of 2.16 kg;
> b) providing a carbon particles-PP masterbatch comprising a blend of:
>
> - at least 5.0 wt.% of carbon particles as determined according to ISO 11358 and based on the total weight of said masterbatch; wherein the carbon particles are selected from nanographene, carbon nanotubes or any combination thereof;
> - a second crystalline polypropylene resin having an MI2 ranging from 80 to 250 g/10 min as determined according to ISO 1133 at 230 °C under a load of 2.16 kg; and
> - from 1.0 wt.% to 20 wt.% of an atactic polypropylene resin;
>
> d) dry blending the components to obtain a composite material wherein the composite material comprises at least 0.08 wt.% based on the total weight of the composite material of the atactic polypropylene resin, and from 0.2 to 10 wt.% based on the total weight of the composite material of carbon particles

For example, at least 60 wt.% of the carbon particles are carbon nanotubes having an average length of 1.3 $\mu$m or more as determined by transmission electron microscopy; for example, all the carbon particles are carbon nanotubes having an average length of 1.3 $\mu$m or more. The average length of the carbon nanotubes is determined before any blending of the said carbon nanotubes with the first and/or with the second crystalline polypropylene resin.

The first crystalline polypropylene resin and step a) of providing a first crystalline polypropylene resin

The composite material according to the disclosure comprises a first crystalline polypropylene resin. For example, the first crystalline polypropylene resin is present in the composite material in a content ranging from 20 to 99 wt.% based on the total weight of the composite material, preferably from 30 to 90 wt.%; more preferably from 40 to 80 wt.% based on the total weight of the composite material. For example, the first crystalline polypropylene resin is present in an amount of at least 20 wt.% as based on the total weight of the composite material according to the disclosure, preferably at least 30 wt.%, even more preferably at least 40 wt.%, most preferably at least 50 wt.% and even most preferably at least 60 wt.% or at least 70 wt.%; and in an amount of at most 99 wt.% as based on the total weight of the composite material according to the disclosure, preferably at most 98 wt.%, more preferably at most 97 wt.%, even more preferably at most 90% wt.%, most preferably at most 85 wt.% and even most preferably at most 80 wt.%.

For example, the first crystalline polypropylene resin is selected from an isotactic polypropylene resin and a syndiotactic polypropylene resin; with preference, the first crystalline polypropylene resin is an isotactic polypropylene resin.

When the first crystalline polypropylene resin disclosure is isotactic, it is characterized by an isotacticity for which the content of mmmm pentads is measured. Preferably, the content of mmmm pentads polypropylene has a content of mmmm pentads of at least 90 % as determined by $^{13}$C-NMR analysis, preferably at least 95 % more preferably at least 98 % and even more preferably of at least 99 %.

The isotacticity may be determined by $^{13}$C-NMR analysis as described in the test methods. Bovey's NMR nomenclature for an isotactic pentad is ...mmmm... with each "m" representing a "meso" dyad or successive methyl groups on the same side in the plane. As known in the art, any deviation or inversion in the structure of the chain lowers the degree of isotacticity and crystallinity of the polymer.

For example, the first crystalline polypropylene resin is selected from a virgin polypropylene resin, a polypropylene post-consumer resin and a blend of a virgin polypropylene resin and a polypropylene post-consumer resin.

For example, the first crystalline polypropylene resin is or comprises a post-consumer resin; wherein the polypropylene post-consumer resin is a blend of recycled polypropylene and recycled polyethylene, wherein the content of the recycled polyethylene is ranging from 2 to 20 wt.% relative to the total weight of the polypropylene post-consumer resin.

The first crystalline polypropylene resin is preferably selected from a propylene homopolymer, a copolymer of propylene with one or more comonomer selected from ethylene and $C_4$-$C_{10}$ alpha-olefins, an heterophasic polypropylene and any mixture thereof.

In an example of the disclosure, the first crystalline polypropylene resin is a homopolymer of propylene. A propylene homopolymer according to this disclosure has less than 0.2 wt.%, preferably, less than 0.1 wt.%, more preferably, less than 0.05 wt.% and most preferably, less than 0.005 wt.%, of alpha-olefins other than propylene in the polymer. Most preferred, no other alpha-olefins are detectable. Accordingly, when the polypropylene resin is a homopolymer of propylene, the comonomer content in the polypropylene is less than 0.2 wt.%, more preferably, less than 0.1 wt.%, even more preferably, less than 0.05 wt.% and most preferably, less than 0.005 wt.% based on the total weight of the polypropylene.

The first crystalline polypropylene resin may be a copolymer of propylene and at least one comonomer, or a mixture thereof. Suitable comonomers can be selected from the group consisting of ethylene and aliphatic $C_4$-$C_{20}$ alpha-olefins. Examples of suitable aliphatic $C_4$-$C_{20}$ alpha-olefins include 1-butene, 1-pentene, 4-methyl-1-pentene, 1-hexene, 1-octene, 1-decene, 1-dodecene, 1-tetradecene, 1-hexadecene, 1-octadecene and 1-eicosene. Preferably, the comonomer is ethylene or 1-hexene. More preferably, the comonomer is ethylene.

In an example, the propylene polymer is a propylene copolymer. The propylene copolymer can be a random copolymer, a heterophasic copolymer, or a mixture thereof.

The random propylene copolymer comprises at least 0.1 wt.% of one or more comonomers, preferably at least 1 wt.%. The random propylene copolymer comprises up to 10 wt.% of one or more comonomers and most preferably up to 6 wt.%. Preferably, the random copolymer is a copolymer of propylene and ethylene.

In a preferred example, the first crystalline polypropylene resin is a heterophasic propylene copolymer resin. The heterophasic propylene copolymers comprise a matrix propylene polymer phase and a dispersed phase of a rubber. With preference, the rubber is ethylene-propylene rubber (EPR).

The heterophasic propylene copolymers of the present disclosure as defined above can be produced by sequential polymerization in a series of polymerization reactors in presence of a catalyst system, wherein in a first polymerization stage the propylene polymer is produced, and in a second polymerization stage the rubber is produced by copolymerizing ethylene and at least one further olefin different from ethylene. The catalyst system is added to the first polymerization stage.

Thus, with preference, the first crystalline polypropylene resin is an heterophasic polypropylene resin consisting of:

> i. from 60 to 95 wt.% based on the total weight of the heterophasic polypropylene resin of a polypropylene-based matrix selected from a homopolymer and/or a copolymer of propylene with one or more comonomer selected from ethylene and $C_4$-$C_{10}$ alpha-olefins; and
> ii. from 40 to 5 wt.% based on the total weight of the heterophasic polypropylene resin of a dispersed ethylene-alpha-olefin copolymer;

with preference, the alpha-olefin in the ethylene-alpha-olefin copolymer is selected from the group of alpha-olefins having from 3 to 8 carbon atoms and/or the alpha-olefin in the ethylene-alpha-olefin copolymer is in the range of 25 to 70 wt.% based on the total weight of the ethylene-alpha-olefin copolymer.

The first crystalline polypropylene resin has a melt index MI2 ranging from 5 to 30 g/10 min as determined according to ISO 1133 at 230 °C under a load of 2.16 kg. With preference, the first crystalline polypropylene resin has a melt index MI2 ranging from 6 to 25 g/10 min as determined according to ISO 1133 at 230 °C under a load of 2.16 kg; preferably, from 7 to 20 g/10 min; more preferably, from 8 to 18 g/10 min.

More preferably, the first crystalline polypropylene resin has a melt index MI2 of at least 5.0 g/10 min, preferably of at least 10.0 g/10 min, more preferably of at least 12.0 g/10 min, even more preferably of at least 13.0 g/10 min, most preferably of at least 14.0 g/10 min, and even most preferably of at least 14.5 g/10 min as measured according to ISO 1133 at 230 °C under a load of 2.16 kg. The value of MI2 of the first crystalline polypropylene resin is obtained without a degradation treatment.

More preferably, the first crystalline polypropylene resin has a melt index MI2 of at most 25.0 g/10 min, preferably of at most 20.0 g/10 min, more preferably of at most 18.0 g/10 min, and most preferably of at most 16.0 g/10 min as measured according to ISO 1133 at 230 °C under a load of 2.16 kg. The value of MI2 of the first crystalline polypropylene resin is obtained without a degradation treatment.

In an example, the first crystalline polypropylene resin has preferably, a density of at most 0.930 g/cm$^3$ as determined according to ISO 1183 at a temperature of 23 °C, preferably, of at most 0.920 g/cm$^3$ more preferably, of at most 0.910 g/cm$^3$.

Polypropylene resins suitable for the disclosure as base resins are commercially available from Total®. A non-limitative example is TOTAL ® PPC7760. The resin has a density of 0.905 g/cm$^3$ as determined according to ISO 1183 and a melt index MI2 of 15.0 g/10 min as measured according to ISO 1133 at 230 °C under a load of 2.16 kg. Another example is PPC 6742. This product has a density of 0.905 g/cm$^3$ and a melt index MI2 of 8 g/10 min as determined according to ISO 1133 at 230 °C under a load of 2.16 kg.

The first crystalline polypropylene resin has a monomodal molecular weight distribution or a multimodal molecular weight distribution, for example, a bimodal molecular weight distribution.

The first crystalline polypropylene resin can be produced by polymerizing propylene and one or more optional comonomers, in the presence of a catalyst being a metallocene catalyst or a Ziegler-Natta catalyst.

In a preferred example, the catalyst system may comprise a Ziegler-Natta catalyst. The term "Ziegler-Natta catalysts" refers to catalysts of the general formula MXn, wherein M is a transition metal compound selected from group IV to VII, wherein X is a halogen, and wherein n is the valence of the metal. Preferably, the metal is titanium, chromium or vanadium. Most preferably, the metal is titanium.

The Ziegler-Natta catalyst system, in accordance with the disclosure, comprises a titanium compound having at least one titanium-halogen bond and an internal electron donor, both on a suitable support, an organoaluminium compound, and an optional external electron donor. A suitable support is, for example, a magnesium halide in an active form. A suitable external electron donor (ED) is, for example, phthalate or succinate or a diether compound. The organoaluminium compound used in the process of the present disclosure is triethyl aluminium (TEAL).

Advantageously, the triethyl aluminium has a hydride content, expressed as $AlH_3$, of less than 1.0 wt.% with respect to the triethyl aluminium. More preferably, the hydride content is less than 0.5 wt.%, and most preferably, the hydride content is less than 0.1 wt.%. It would not depart from the scope of the disclosure if the organoaluminium compound contains minor amounts of other compounds of the trialkyl aluminium family, such as triisobutyl aluminium, tri-n-butyl aluminium, and linear or cyclic alkyl aluminium compounds containing two or more Al atoms, provided they show polymerization behaviour comparable to that of TEAL.

In the process of the present disclosure, the molar ratio Al/Ti is not particularly specified. However, it is preferred that the molar ratio Al/Ti is at most 100.

If an external electron donor is present, it is preferred that the molar ratio Al/ED, with ED denoting external electron donor, is at most 120, more preferably, it is within the range of 5 to 120, and most preferably, within the range of 10 to 80. Before being fed to the polymerization reactor, the catalytic system preferably undergoes a premix and/or a pre-polymerization step. In the premix step, the triethyl aluminium (TEAL) and the external electron donor (ED) - if present -, which have been pre-contacted, are mixed with the Ziegler-Natta catalyst at a temperature within the range of 0 °C to 30 °C, preferably, within the range of 5 °C to 20 °C, for up to 15 min. The mixture of TEAL, an external electron donor (if present) and Ziegler-Natta catalyst is pre-polymerized with propylene at a temperature within the range of 10 °C to 100 °C, preferably, within the range of 10 °C to 30 °C, for 1 to 30 min, preferably, for 2 to 20 min.

In the first stage, the polymerization of propylene and one or more optional comonomers can, for example, be carried out in liquid propylene as reaction medium (bulk polymerization). It can also be carried out in diluents, such as hydrocarbon that is inert under polymerization conditions (slurry polymerization). It can also be carried out in the gas phase. Those processes are well known to one skilled in the art.

Diluents, which are suitable for being used in accordance with the present disclosure, may comprise but are not limited to hydrocarbon diluents such as aliphatic, cycloaliphatic and aromatic hydrocarbon solvents, or halogenated versions of such solvents. Non-limiting illustrative examples of solvents are butane, isobutane, pentane, hexane, heptane, cyclopentane, cyclohexane, cycloheptane, methyl cyclopentane, methyl cyclohexane, isooctane, benzene, toluene, xylene, chloroform, chlorobenzenes, tetrachloroethylene, dichloroethane and trichloroethane.

For the present disclosure, the propylene polymers are preferably produced by polymerization in liquid propylene at temperatures within the range of 20 °C to 100 °C. Preferably, temperatures are within the range of 60 °C to 80 °C. The pressure can be atmospheric or higher. Preferably, the pressure is ranging between 25 and 50 bars.

Hydrogen is used to control the chain lengths of the propylene polymers. For the production of a propylene polymer with higher MI2, i.e. with lower average molecular weight and shorter polymer chains, the concentration of hydrogen in the polymerization medium needs to be increased. Inversely, the hydrogen concentration in the polymerization medium has to be reduced in order to produce a propylene polymer with lower MI2, i.e. with higher average molecular weight and longer polymer chains.

In such a sequential arrangement of polymerization reactors, the propylene homopolymer withdrawn from one reactor is transferred to the one following in the series, where the polymerization is continued. To produce propylene homopolymer fractions of different melt indexes, the polymerization conditions in the respective polymerization reactors need to be different, for example in that the hydrogen concentration in the polymerization reactors differs. The melt index MI2 of the propylene polymer produced in the second reactor is calculated using the following equation (2):

$$\text{Log }(MI2_{final}) = w_{B1} \times (\text{Log } MI2_{B1}) + w_{B2} \times \text{Log}(MI2_{B2}) \qquad (2)$$

wherein $MI2_{final}$ is the melt index MI2 of the total propylene polymer produced, $MI2_{B1}$ and $MI2_{B2}$ are the respective a melt index MI2 of the propylene polymers fractions produced in the first and the second polymerization loop reactors, and $w_{B1}$ and $w_{B2}$ are the respective weight fractions of the propylene polymers produced in the first and in the second polymerization loop reactors as expressed in weight per cent (wt.%) of the total propylene polymer produced in the two polymerization loop reactors. These weight fractions are also commonly described as the contribution by the respective loop.

The matrix propylene polymer, preferably, propylene homopolymer, can be made for example in loop reactors or in a gas phase reactor. The propylene polymer produced in this way, in a first polymerization stage, is transferred to a second polymerization stage, into one or more secondary reactors where ethylene and at least one further olefin different from ethylene are added to produce the rubber. For example, further olefin is propylene. Thus, the rubber produced is ethylene-propylene rubber (EPR). Preferably, this polymerization step is done in a gas phase reactor. The propylene copolymer can be prepared using a controlled morphology catalyst that produces rubber spherical domains dispersed in a polypropylene matrix. The amount and properties of the components are controlled by the process conditions.

The average molecular weight of the rubber, for which the intrinsic viscosity is a measure, is controlled by the addition of hydrogen to the polymerization reactors of the second polymerization stage. The amount of hydrogen added is such that the rubber as an intrinsic viscosity 2.0 dl/g, and of at most 5.5 dl/g, measured in tetralin at 135 °C following ISO 1628. The contribution of the second polymerization stage, i.e. the rubber content of the heterophasic propylene copolymer is from 5 to 50 wt.% relative to the total weight of the heterophasic propylene copolymer.

The first crystalline polypropylene resin, according to the disclosure, may contain additives such as, by way of example, antioxidants, light stabilizers, acid scavengers, flame retardants, lubricants, antistatic additives, nucleating/clarifying agents, colourants. An overview of such additives may be found in Plastics Additives Handbook, ed. H. Zweifel, 5th edition, 2001, Hanser Publishers.

The antioxidants used in the first crystalline polypropylene resin of the present disclosure, preferably, have anti-gas fading properties. The preferred antioxidants are selected from the group consisting of phosphites, hindered phenols, hindered amine stabilizers and hydroxylamines. An example of a suitable antioxidant additivation is a blend of Irgafos 168 and Irganox 3114. Alternatively, phenol-free antioxidant additivations are suitable as well, such as for example those based on hindered amine stabilizers, phosphites, hydroxylamines or any combination of these. In general, the antioxidants are added to the propylene homopolymer in an amount from 100 ppm to 2000 ppm with the exact amount depending upon the nature of the antioxidant, the processing conditions and other factors.

After the last polymerization reactor, the polymers are recovered as a powder and can then be pelletized or granulated.

The second crystalline polypropylene resin, the carbon particles and the step b) of providing a masterbatch

In an example, the carbon particles are provided in the form of a masterbatch comprising a blend of one or more crystalline polypropylene resins and the carbon particles. The crystalline polypropylene resin of the masterbatch can be the same that the first crystalline polypropylene resin. However, in a preferred example, the crystalline polypropylene resin of the masterbatch is a second crystalline polypropylene resin different from the first crystalline polypropylene resin.

The carbon particles are or comprise carbon nanotubes; preferably, the carbon particles comprise at least 60 wt.% of carbon nanotubes based on the total weight of the carbon particles; more preferably, the carbon particles comprise at least 70 wt.% of carbon nanotubes based on the total weight of the carbon particles; and even more preferably, all the carbon particles are carbon nanotubes

Thus in an example, the carbon particles-masterbatch comprises a blend of:

- at least 50 wt.% of a second crystalline polypropylene resin based on the total weight of said masterbatch; wherein the second crystalline polypropylene resin has an MI2 ranging from 80 to 250 g/10 min as determined according to ISO 1133 at 230 °C under a load of 2.16 kg;
- at least 5.0 wt.% of carbon particles as determined according to ISO 11358 and based on the total weight of the said masterbatch.

For example, the second crystalline polypropylene resin is selected from an isotactic polypropylene resin and a syndiotactic polypropylene resin; with preference, the second crystalline polypropylene resin is an isotactic polypropylene resin.

For example, the second crystalline polypropylene resin is selected from a virgin polypropylene resin, a polypropylene post-consumer resin and a blend of a virgin polypropylene resin and a polypropylene post-consumer resin.

For example, the second crystalline polypropylene resin is or comprises a post-consumer resin; wherein the polypropylene post-consumer resin is a blend of recycled polypropylene and recycled polyethylene, wherein the content of the recycled polyethylene is ranging from 2 to 20 wt.% relative to the total weight of the polypropylene post-consumer resin.

The second crystalline polypropylene resin is selected from a propylene homopolymer and/or a copolymer of propylene with one or more comonomer selected from ethylene and $C_4$-$C_{10}$ alpha-olefins. The definition given for the homopolymer and the copolymer of the first crystalline polypropylene resin applies to the second crystalline polypropylene resin. With preference, the second polypropylene resin is a propylene homopolymer. The definitions given in relation to the first crystalline polypropylene resin regarding propylene homopolymer, random copolymer and heterophasic copolymer apply to the second crystalline polypropylene resin.

In a preferred example, the second crystalline polypropylene resin is a metallocene-catalyzed polypropylene and have a molecular weight distribution ranging from 2.0 to 4.5.

With preference, the second crystalline polypropylene resin has a melt index MI2 ranging from 90 to 200 g/10 min as determined according to ISO 1133 at 230 °C under a load of 2.16 kg; preferably, from 100 to 180 g/10 min; more preferably, from 120 to 160 g/10 min.

More preferably, the second crystalline polypropylene resin has a melt index MI2 of at least 90.0 g/10 min, preferably of at least 95.0 g/10 min, more preferably of at least 100.0 g/10 min, even more preferably of at least 105.0 g/10 min, most preferably of at least 110.0 g/10 min, and even most preferably of at least 120 g/10 min as measured according to ISO 1133 at 230 °C under a load of 2.16 kg. The value of MI2 of the second crystalline polypropylene resin is obtained without a degradation treatment.

More preferably, the second crystalline polypropylene resin has a melt index MI2 of at most 200.0 g/10 min, preferably of at most 180.0 g/10 min, more preferably of at most 170.0 g/10 min, and most preferably of at most 160.0 g/10 min as measured according to ISO 1133 at 230 °C under a load of 2.16 kg. The value of MI2 of the second crystalline polypropylene resin is obtained without a degradation treatment.

Preferably, the second crystalline polypropylene resin has a melting temperature Tm comprised between 130 °C and 170 °C, as measured according to ISO 3146, more preferably, of at least 150 °C.

In an example, the second crystalline polypropylene resin has a density between 0.880 to 0.920 g/cm$^3$ as determined according to ISO 1183.

When present, the second crystalline polypropylene resin is present in the composite material in a content ranging from 5 to 40 wt.% based on the total weight of the composite material, preferably from 10 to 30 wt.%; more preferably from 15 to 25 wt.% based on the total weight of the composite material. For example, the second crystalline polypropylene resin is present in an amount of at least 5 wt.% as based on the total weight of the composite material, preferably at least 8 wt.%, even more preferably at least 10 wt.%, most preferably at least 12 wt.% and even most preferably at least 15 wt.% or at least 18 wt.%; and in an amount of at most 40 wt.% as based on the total weight of the composite material, preferably at most 35 wt.%, more preferably at most 32 wt.%, even more preferably at most 30% wt.%, most preferably at most 25 wt.% and even most preferably at most 24 wt.%.

Commercially available polypropylene resins suitable for use as second crystalline polypropylene resins are selected from TOTAL®. An example is MH140CN0. This product has a density of 0.905 g/cm$^3$ and a melt index MI2 of 140 g/10 min as determined according to ISO 1133 at 230 °C under a load of 2.16 kg.

The masterbatch according to the disclosure comprises a polypropylene and carbon particles. According to a preferred example, the carbon particles are present in an amount from 5.0 to 25.0 wt.% as based on the total weight of the masterbatch, preferably from 7.5 to 20 wt.%, and more preferably between 9.0 to 15.0 wt.%.

The carbon particles are selected from nanographene, carbon nanotubes or any combination thereof. With preference, the carbon particles are carbon nanotubes.

Suitable carbon nanotubes used in the present disclosure can generally be characterized by having a size from 1 nm to 5 μm, this definition of size can be limited to two dimensions only, i.e. the third dimension may be outside of these limits. In a preferred example, at least 60 wt.% of the carbon nanotubes have an average length of 1.3 μm or more as determined by transmission electron microscopy; preferably, all the carbon nanotubes have an average length of 1.3 μm or more. This can be achieved by dry blending carbon nanotubes of different length.

Suitable carbon nanotubes also referred to as "nanotubes" herein, can be cylindrical in shape and structurally related to fullerenes, an example of which is Buckminsterfullerene ($C_{60}$). Suitable carbon nanotubes may be open or capped at their ends. The end cap may, for example, be a Buckminster-type fullerene hemisphere.

Suitable carbon nanotubes used in the present disclosure can comprise more than 80%, more preferably, more than 85%, more preferably, more than 90%, more preferably, more than 95%, even more preferably, more than 99%; and most preferably, more than 99.9% of their total weight in carbon. However, minor amounts of other atoms may also be present.

Carbon nanotubes can exist as single-walled nanotubes (SWNT) and multi-walled nanotubes (MWNT), i.e. carbon nanotubes having one single wall and nanotubes having more than one wall, respectively. In single-walled carbon nanotubes a one atom thick sheet of atoms, for example, a one atom thick sheet of graphite (also called graphene), is rolled seamlessly to form a cylinder. Multi-walled carbon nanotubes consist of a number of such cylinders arranged concentrically. The arrangement, in multi-walled carbon nanotubes, can be described by the so-called Russian doll model, wherein a larger doll opens to reveal a smaller doll.

In an example, the carbon nanotubes are single-walled nanotubes characterized by an outer diameter of at least 0.5 nm, more preferably, of at least 1 nm, and most preferably, of at least 2 nm. Preferably, their outer diameter is at most 50 nm, more preferably, at most 30 nm and most preferably, at most 10 nm. Preferably, the length of single-walled nanotubes is at least 0.1 $\mu$m, more preferably, at least 1 $\mu$m, even more preferably, at least 10 $\mu$m. Preferably, their length is at most 50 $\mu$m, more preferably, at most 25 $\mu$m.

In an example, the carbon nanotubes are single-walled carbon nanotubes, preferably, having an average L/D ratio of at least 1000.

In an example, the carbon nanotubes are multi-walled carbon nanotubes, more preferably, multi-walled carbon nanotubes having on average from 5 to 15 walls.

Multi-walled carbon nanotubes are preferably characterized by an outer diameter of at least 1 nm, more preferably, of at least 2 nm, 4 nm, 6 nm or 8 nm, and most preferably, of at least 9 nm. The preferred outer diameter is at most 100 nm, more preferably, at most 80 nm, 60 nm or 40 nm, and most preferably, at most 20 nm. Most preferably, the outer diameter is in the range from 10 nm to 20 nm. The preferred length of the multi-walled nanotubes is at least 50 nm, more preferably, at least 75 nm, and most preferably, at least 100 nm. In an example, the multi-walled carbon nanotubes have an average outer diameter in the range from 10 nm to 20 nm or an average length in the range from 100 nm to 10 $\mu$m or both. In an example, the average L/D ratio (length/diameter ratio) is at least 5, preferably, at least 10, preferably, at least 25, preferably, at least 50, preferably, at least 100, and more preferably, higher than 100. Carbon nanotubes according to the disclosure have a transition metal oxide content of less than 3%, more preferably, less than 2%, and more preferably, less than 1% measured according to Inductively Coupled Plasma Mass Spectrometry (ICP-MS).

Suitable carbon nanotubes to be used in the present disclosure can be prepared by any method known in the art. Non-limiting examples of commercially available multi-walled carbon nanotubes are Graphistrength™ 100, available from Arkema, Nanocyl™ NC 7000 available from Nanocyl, FloTube™ 9000 available from CNano Technology.

Nanocyl™ NC 7000 available from Nanocyl are carbon nanotubes having an average L/D ratio of at most 500.

The CNT-PP masterbatch is produced by blending together a second crystalline polypropylene resin having a melting temperature Tm as measured according to ISO 3146, carbon nanotubes, and optional processing aids, in an extruder comprising a transport zone and a melting zone maintained at a temperature comprised between Tm + 1 °C and Tm + 50 °C, preferably, comprised between Tm + 5 °C and Tm + 30 °C.

In an example, the process for the preparation of the masterbatch according to the present disclosure comprises the steps of:

    i. providing carbon nanotubes,

    ii. providing a second crystalline polypropylene resin having a melting temperature, Tm, measured according to ISO 3146, and wherein said second crystalline polypropylene resin has a melt index MI2 ranging from 80 to 250 g/10 min as determined according to ISO 1133 at 230 °C under a load of 2.16 kg,

    iii. blending together said carbon nanotubes and said second crystalline polypropylene resin by extrusion in an extruder comprising a transport zone and a melting zone maintained at a temperature comprised between Tm + 1 °C and Tm + 50 °C, preferably, between Tm + 5 °C and Tm + 30 °C, and

    iv. forming a masterbatch through a die, said masterbatch,

      • comprising at least 5 wt.% of carbon nanotubes based on the total weight of the masterbatch as determined according to ISO 11358, and

      • having a high load melt index, HLMI, of from 2 g/10 min to 1000 g/10 min, preferably, ranging from 10 to 1000 g/10 min, determined according to ISO 1133 under a load of 21.6 kg.

In a preferred example, the process further comprises the step of blending from 0.01 to 4.0 wt.%, preferably, from 0. 1 to 2.0 wt.% of one or more processing aids based on the total weight of the masterbatch, with the second crystalline polypropylene resin and the carbon nanotubes in step iii).

Therefore, in an example, the masterbatch further comprises from 0.01 to 4.0 wt.% of a processing aid as based on the total weight of the masterbatch, said processing aid is selected from fluoroelastomers, waxes, tristearin, erucyl amide, oleic acid amide, ethylene-acrylic acid copolymer, ethylene-vinyl acetate copolymer, cetyl trimethyl ammonium bromide, polysiloxanes, oleamide, stearamide, behenamide, oleyl palmitamide, ethylene bis-oleamide, ethylene bis (stearamide) (EBS) and any mixture thereof.

For example, the process further comprises the step of blending from 1.0 wt.% to 20 wt.% based on the total weight of the masterbatch of an atactic polypropylene resin; with preference from 2 to 15 wt.%, preferably from 3 to 12 wt.%, more preferably from 5 to 10 wt.%.

For example, the masterbatch comprises a blend of:

- at least 5.0 wt.% of carbon particles as determined according to ISO 11358 and based on the total weight of said masterbatch; wherein the carbon particles are selected from nanographene, carbon nanotubes or any combination thereof;
- a second crystalline polypropylene resin having an MI2 ranging from 80 to 250 g/10 min as determined according to ISO 1133 at 230 °C under a load of 2.16 kg; and
- from 1.0 wt.% to 20 wt.% of an atactic polypropylene resin based on the total weight of the masterbatch;

with preference, the second crystalline polypropylene resin is a propylene homopolymer.

In a preferred example, step iii) is carried out on co-rotating twin-screw extruder at a screw speed of at least 300 rpm, preferably, at least 500 rpm.

The atactic polypropylene resin and the step c) of providing an atactic polypropylene resin.

The disclosure provides the use of atactic polypropylene resin as an additive of the composite material in order to improve the electrical properties obtained on the articles produced from said composite material at a low carbon content. For example, the atactic polypropylene resin is soluble in hexane at a temperature of 65 °C or more.

For example, the atactic polypropylene has a melting enthalpy lower than about 40 J/g, preferably lower than 30 J/g and more preferably lower than 20 J/g.

For example, the atactic polypropylene has a melting enthalpy ranging from 0 to 39 J/g; for example, from 1 to 35 J/g; preferably, from 5 to 25 J/g; more preferably, from 8 to 20 J/g.

According to the disclosure, the atactic polypropylene resin added to the inventive composition has a density from 0.850 to 0.900 g/cm$^3$ as determined according to ISO 1183 at a temperature of 23 °C, preferably from 0.860 to 0.890 g/cm$^3$.

According to an example of the disclosure, the atactic polypropylene resin has a hexane content of at most 0.2 wt.% as determined by TDA-GC analysis.

According to an example of the disclosure, the atactic polypropylene resin has an ash content of at most 4.5 wt.%

The composite material

In an example, the polypropylene composition is present in the composite material at a content ranging from 85 to 99 wt.% based on the total weight of the composite material; preferably ranging from 90 to 98 wt.%.

With preference, the polypropylene composition comprises from 20 to 99 wt.% of a first crystalline polypropylene resin based on the total weight of the composite material; preferably, the polypropylene composition further comprises:

- from 5 to 30 wt.% based on the total weight of the composite material of a second crystalline polypropylene resin; and/or
- from 10 to 50 wt.% of a polypropylene post-consumer resin.

For example, the polypropylene composition comprises one or more polypropylene post-consumer resins; with preference, polypropylene composition comprises from 5 to 100 wt.% of polypropylene post-consumer resin based on the total weight of the polypropylene composition; preferably from 20 to 95 wt.%; more preferably, from 40 to 90 wt.%, even more preferably from 50 to 85 wt.% and most preferably from 60 to 80 wt.%

For example, the first crystalline polypropylene resin comprises from 20 to 95 wt.% of polypropylene post-consumer resin based on the total weight of the first crystalline polypropylene resin, preferably from 40 to 90 wt.%, more preferably from 50 to 85 wt.% and most preferably from 60 to 80 wt.%.

For example, the first crystalline polypropylene resin is or comprises a post-consumer resin; wherein the polypropylene post-consumer resin has an MI2 ranging from 5 to 30 g/10 min as determined according to ISO 1133 at 230 °C under a load of 2.16 kg; preferably from 7 to 20 g/10 min.

For example, the first crystalline polypropylene resin is or comprises a post-consumer resin; wherein the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

Wherein the composition comprises a second crystalline polypropylene resin, the said second crystalline polypropylene resin may comprise from 20 to 95 wt.% of polypropylene post-consumer resin based on the total weight of the second crystalline polypropylene resin, preferably from 40 to 90 wt.%, more preferably from 50 to 85 wt.% and most preferably from 60 to 80 wt.%.

Wherein the composition comprises a second crystalline polypropylene resin, the said second crystalline polypropylene resin may be or may comprise a post-consumer resin, and the polypropylene post-consumer resin has an MI2 ranging from 80 to 250 g/10 min as determined according to ISO 1133 at 230 °C under a load of 2.16 kg.

Wherein the composition comprises a second crystalline polypropylene resin, the said second crystalline polypropylene resin may be or may comprise a post-consumer resin; and the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

For example, the polypropylene post-consumer resin is a blend of recycled polyethylene and recycled polypropylene with a content of recycled polyethylene ranging from 3 to 20 wt.% based on the total weight of the polypropylene post-consumer resin.

In all examples of the disclosure, the composite material may further comprise one or more additives different from the listed processing aids, the one or more additive being selected from the group comprising an antioxidant, an antiacid, a UV-absorber, an antistatic agent, a light stabilizing agent, an acid scavenger, a lubricant, a nucleating/clarifying agent, a colourant or a peroxide. An overview of suitable additives may be found in Plastics Additives Handbook, ed. H. Zweifel, 5th edition, 2001, Hanser Publishers, which is hereby incorporated by reference in its entirety.

In all examples of the disclosure, the composite material may comprise from 0 wt.% to 45 wt.% of one or more filler based on the total weight of the composite material, preferably, from 1 wt.% to 35 wt.%. The one or more fillers are selected from the group consisting of talc, calcium carbonate, calcium hydroxide, barium sulphate, mica, calcium silicate, clay, kaolin, silica, alumina, wollastonite, magnesium carbonate, magnesium hydroxide, titanium oxide, zinc oxide, zinc sulphate, natural fibres, glass fibres. With preference, the filler is talc.

The disclosure also encompasses the article as described herein wherein the composite material comprises from 0% to 10% by weight of at least one additive such as antioxidant, based on the total weight of the composite material. In a preferred example, said composite material comprises less than 5% by weight of an additive, based on the total weight of the composite material, for example from 0.1 to 3% by weight of the additive, based on the total weight of the composite material.

In an example, the composite material comprises an antioxidant. Suitable antioxidants include, for example, phenolic antioxidants such as pentaerythritol tetrakis[3-(3',5'-di-tert-butyl-4'-hydroxyphenyl)propionate] (herein referred to as Irganox® 1010), tris(2,4-ditert-butylphenyl) phosphite (herein referred to as Irgafos® 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methyl-phenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (Antioxidant 1098), Diethyl 3.5-Di-Tert-Butyl-4-Hydroxybenzyl Phosphonate, Calcium bis[monoethyl(3,5-di-tert-butyl-4-hydroxylbenzyl)phosphonate], Triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, Tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-Thio-bis(6-tert-butyl-m-methyl phenol) (Antioxidant 300), 2,2'-Sulfanediylbis(6-tert-butyl-4-methylphenol) (Antioxidant 2246-S), 2-Methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxy-benzoate, 2-(1,1-dimethylethyl)-6-[[3-(1,1-dimethylethyl)-2-hydroxy-5-methylphenyl] methyl]-4-methylphenyl acrylate, and CAS 128961-68-2 (Sumilizer® GS). Suitable antioxidants also include, for example, aminic antioxidants such as N-phenyl-2-naphthylamine, poly(1,2-dihydro-2,2,4-trimethyl-quinoline), N-isopropyl-N'-phenyl-p-phenylenediamine, N-Phenyl-1-naphthylamine, CAS 68411-46-1 (Antioxidant 5057), and 4,4-bis(alpha,alpha-dimethylbenzyl)diphenylamine (Antioxidant KY 405). Preferably, the antioxidant is selected from pentaerythritol tetrakis[3-(3',5'-di-tert-butyl-4'-hydroxyphenyl) propionate] (herein referred to as Irganox 1010), tris(2,4-ditert-butylphenyl) phosphite (herein referred to as Irgafos® 168), or a mixture thereof.

The conductive article and the process to produce a conductive article

The process of producing a composite material can be continued with a step e) of forming an article from the composite material. With preference, the article is formed by extrusion.

Preferably, step e) of the present process is carried out in a twin-screw extruder with a screw rotation speed comprised between 5 to 1000 rpm, preferably between 10 and 750 rpm, more preferably between 15 and 500 rpm, most preferably between 20 and 400 rpm, in particular between 25 and 300 rpm.

With preference, in all examples, the step d) of dry blending and the step e) of forming a conductive article by extrusion are performed together in a single step using a single extruder. Thus, the different components of the composite material are dry blended together and directly provided to the extruder. The different components of the composite material are not melted blended nor chopped into pellets before the extrusion step.

Conducting the dry blending and the shaping of the article by extrusion in a single step allows to achieve better electrical properties. Indeed, the fact that the composite material is not chopped into pellets before being extrusion allows reducing the percentage of carbon nanotubes being damaged under shear so their length is reduced.

According to the disclosure, the proportion of the carbon nanotubes having an average length of 1.3 $\mu$m or more after the step e) of extrusion is greater when the step d) and e) are performed together in a single step compared to the proportion of the carbon nanotubes having an average length of 1.3 $\mu$m or more after the step e) of extrusion when the step d) and e) are performed as separate sequential steps, i.e. wherein the blending is carried out in a distinct process step prior to the extrusion of the article.

**Test methods**

The melt index MI2 of the polypropylene is determined according to ISO 1133 at 230 °C under a load of 2.16 kg.

Molecular weights are determined by Size Exclusion Chromatography (SEC) at high temperature (145 °C). A 10 mg polypropylene sample is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Detector: IR5 Infrared detector (2800-3000 cm$^{-1}$);
- Calibration: Narrow standards of polystyrene (commercially available);
- Calculation for polypropylene: Based on Mark-Houwink relation ($\log_{10}(M_{PP}) = \log_{10}(M_{PS}) - 0,25323$); cut off on the low molecular weight end at $M_{PP} = 1000$;

The molecular weight averages used in establishing molecular weight/property relationships are the number average ($M_n$), weight average ($M_w$) and z average ($M_z$) molecular weight.

These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

The molecular weight distribution (MWD) is then calculated as Mw/Mn.

The $^{13}$C-NMR analysis is performed using a 400 MHz or 500 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data is acquired using proton decoupling, 2000 to 4000 scans per spectrum with 10 mm room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenize the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg to 600 mg of polymer is dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The comonomer content of polypropylene is determined by $^{13}$C-NMR analysis of pellets according to the method described by G.J. Ray et al. in Macromolecules, vol. 10, n° 4, 1977, p. 773-778.

The isotacticity is determined by $^{13}$C-NMR analysis on the total polymer. In the spectral region of the methyl groups, the signals corresponding to the pentads mmmm, mmmr, mmrr and mrrm are assigned using published data, for example, A. Razavi, Macromol. Symp., vol. 89, pages 345-367. Only the pentads mmmm, mmmr, mmrr and mrrm are taken into consideration due to the weak intensity of the signals corresponding to the remaining pentads. For the signal relating to the mmrr pentad, a correction is performed for its overlap with a methyl signal related to 2,1-insertions. The percentage of mmmm pentads is then calculated according to

$$\% \ mmmm = AREA_{mmmm} / (AREA_{mmmm} + AREA_{mmmr} + AREA_{mmrr} + AREA_{mrrm}) \bullet 100$$

The ash content was measured by calcination of 5 to 10 g of polymer in the oven at 600 °C. After cooling, measure the residual ash content weight.

Determination of the hexane content by thermal desorption analysis (TDA) coupled with gas chromatography (GC)

The polymer sample (40 to 60 mg) is introduced in an ATD/GC equipment (Automatic Thermal Desorber) with FID (flame ionization detector) detection for the quantitative analysis.

In this analysis, a thermal desorption process is imposed to the polymer sample during 15 minutes at 150°C in an oven. Volatile organic compounds are extracted from the sample by an imposed helium flux and are captured in an adsorbant cartridge TENAX cooled at -30°C.

In a second process, volatile compounds are injected in a chromatographic separation column via a rapid heating process of the cartridge at 230°C. The analytes are separated onto the column before being detected by FID.

Results: The compounds are identified based on their retention times in comparison with previously determined retention times of n-paraffins (including hexane), in the same experimental conditions. The quantification of the components is performed using an external calibration curve (linear) established using 1-hexene as reference.

Chromatographic analysis conditions:

Capillary column: type: HP-5

Length: 60m
Internal diameter: 0.32mm
Phase type: 5% Ph-Me-siloxane

Phase thickness: 1 μm

Detector type: F.I.D

Temperature: 280°C
Air flow: 450 ml/min
Hydrogen flow: 40 ml/min
Flow make up: 30ml/min (constant)

GC oven programmation: Isothermal temperature 1: 45 °C

Isotherm time 1: 15 minutes
Heating rate: 5 °C/min
Isothermal temperature 2: 280 °C
Isothermal time 2: 25 min. or 5 min. for the calibration line

ATD conditions

Thermo desorption equipment: TurboMatrix ATD from Perkin Elmer
Oven temperature: 150 °C
Desorption time: 15 minutes.
Trap temperature: Low temperature: -30 °C (trapping mode)
High temperature: 230 °C (desorption mode)
Desorption time of the trap: 10 minutes
Trap heating rate: 99 °C/s
Temperature of the transfer line: 250 °C
Valve block temperature: 200 °C
Carrier gas pressure: 12.5 psi
Inlet split flow: 37 ml/min
Outlet split flow: 16.5ml/min
Desorption flow: 20 ml/min
Considered mode: MS
Purge time: 1 minute
Run time: 79 minutes (32 minutes for the calibration line)

Melting temperatures Tm were determined according to ISO 3146 on a DSC Q2000 instrument by TA Instruments. To erase the thermal history the samples are first heated to 200 °C and kept at 200 °C for a period of 3 minutes. The reported melting temperatures Tm are then determined with heating and cooling rates of 20 °C/min.

The density is determined according to ISO 1183 at a temperature of 23 °C.

The content of carbon nanotubes in percentage by weight in blends (%CNT) can be determined by thermal gravimetric analysis (TGA) according to ISO 11358, using a Mettler Toledo STAR TGA/DSC 1 apparatus. Prior to the determination of the content of carbon nanotubes in % by weight in blends (%CNT), the carbon content of the carbon nanotubes in % by weight (%C-CNT) was determined as follows: 2 to 3 milligrams of carbon nanotubes were placed into a TGA. The material was heated at a rate of 20 °C/min from 30 °C to 600 °C in nitrogen (100 ml/min). At 600 °C, the gas was switched to air (100 ml/min), and the carbon oxidized, yielding the carbon content of the carbon nanotubes in % by weight (%C-CNT). The %C-CNT value was the average of 3 measurements. For the content of carbon nanotubes % by weight in blends (%CNT), 10 to 20 milligrams of sample was placed into a TGA. The material was heated at a rate of 20 °C/min from 30 °C to 600 °C in nitrogen (100 ml/min). At 600 °C, the gas was switched to air (100 ml/min), and the carbon oxidized, yielding to the carbon content of carbon nanotubes in the sample (%C-sample). The %C-sample value was the average of 3 measurements. The content of carbon nanotubes in % by weight in the sample (%CNT) was then determined by dividing the carbon content of carbon nanotubes in % by weight in samples (%C-sample) by the carbon content of the carbon nanotubes in % by weight (%C-CNT) and multiplying by 100.

$$\%CNT = \%C\text{-sample} / \%C\text{-CNT} * 100$$

The surface resistance (Ohm) was measured according to IEC 61340-4-1 with an SRM110 meter. The SRM110 is a surface resistance tester. Its internal parallel electrodes comply with DIN EN 100 015/1. IEC electrodes were externally connected for tests according to IEC 61340-4-1.

Method for determination of length distributions of carbon nanotubes

The length distributions of carbon nanotubes within the injection moulded composite article is determined based on the method disclosed in Krause et al., Carbon, 2011, 49, 1243-1247. Parts of the shaped composite article was dissolved in 20 ml of xylene overnight and stirred. A drop of this mixture was placed on a Cu grid coated with carbon film. After evaporation of xylene, TEM images of the Cu grid were collected (25 images, 100 kV, 50.000x). The nanotube lengths were measured by applying the software "iTEM" (Olympus) using the measurement function "polygonal line".

The following non-limiting examples illustrate the disclosure.

Example 1: Preparation of a masterbatch comprising carbon nanotubes

The carbon nanotubes used were multi-walled carbon nanotubes Nanocyl™ NC 7000, commercially available from Nanocyl. These CNTs have a surface area of 250-300 $m^2$/g (measured by the BET method), a carbon purity of carbon of about 90 % by weight (measured by thermal gravimetric analysis), an average diameter of 9.5 nm and an average length of 1.5 $\mu$m (as measured by transmission electron microscopy).

The carbon nanotubes have a carbon purity of at least 80 % by weight, preferably, of at least 85 % by weight, and more preferably, about 90 % by weight (measured by thermal gravimetric analysis).

The second crystalline polypropylene resin (PP2) used has a melt flow index of 140 g/10 min as measured according to ISO 1133 H (230 °C, 2.16kg), a density of 0.905 g/cm³ (ISO 1183) and a Tm of 150 °C (ISO 3146).

The masterbatch MB1 was prepared by blending polypropylene PP2 and carbon nanotubes, using classical twin-screw extrusion process. Carbon nanotubes powder and polypropylene were introduced into the extruder such as to obtain a CNT content of about 10 % by weight based on the total weight of the masterbatch. The masterbatch MB1 was blended on Leitztriz co-rotating twin-screw extruder with an L/D ratio of 52 (D=60), the barrel temperature was set at 180°C.

Example 2: Preparation of the articles

Extruded sheets were prepared by mixing the masterbatch with the first isotactic polypropylene resin (PP1) commercially available from TOTAL® under the name PPC 7760, under the following procedure.

Comparative sample 1 was prepared by dry-blending 25 wt.% of the masterbatch MB1 comprising the carbon nanotubes and 75 wt.% of PP1. Comparative sample 1 is devoid of atactic.

Comparative sample 2 contains 25 wt.% of a masterbatch comprising the carbon nanotubes, 74.93 wt.% of PP1 and 0.07 wt.% of atactic propylene.

Inventive Sample 3 contains 25 wt.% of a masterbatch comprising the carbon nanotubes, 74.91wt.% of PP1 and 0.09 wt.% of atactic propylene.

A sheet is produced starting with a dry blend of 74.91 wt.% of PPC7760 (commercial grade produced by Total), 25 wt.% of the masterbatch MB1 and 0.09 wt.% of atactic polypropylene. The dry-blend is introduced in the hopper of a Collin equipment. The (single) screw of the equipment is characterized by L/D=35 (L = length, D = diameter = 30 mm - The screw ends with a pineapple mixer and a Maddock's mixer). Temperature is imposed at 200°C everywhere along the screw. A gear pump is located between the screw and the die (imposed pressure at the gear pump = 200 bars). The polymer exits (throughput = 8 kg/hour) from the Collin equipment through a flat die (thickness = 1.8 mm - length = 25 cm - imposed temperature at the die: 240°C). When exiting from the die, the polymer arrives in a chill roll, regulated between 90 and 95°C and rotating at 0.45 m/min at the surface. The so-produced sheet is 1.4 mm thick.

The sheet of comparative samples 1 and 2 have been produced according to the same conditions.

Surface resistances were measured according to IEC 61340-4-1 with an SRM110 meter. The results are given in Table 1.

**Table 1**

| Sample | First polypropylene base resin (wt.%) | MB PP-CNT (wt. %) | aPP (wt.%) | CNT (wt.%) | Sheet surface resistance (Ohm) | Type of composition |
|---|---|---|---|---|---|---|
| 1 | 75 | 25 | 0 | 2.5 | >1E+12 | insulative |
| 2 | 74.93 | 25 | 0.07 | 2.5 | >1E+12 | insulative |
| 3 | 74.91 | 25 | 0.09 | 2.5 | 1E+6 | conductive |

According to table 1, in the absence of atactic polypropylene or in an insufficient amount, the articles are insulative. However, when atactic polypropylene is present at 0.09 wt.% as based on the total weight of the composite material, the resulting article becomes conductive.

**Claims**

1. A composite material comprising:

   - from 80 wt.% to 99 wt.% based on the total weight of the composite material, of a polypropylene composition comprising a first crystalline polypropylene resin and an optional second crystalline polypropylene resin;
   - from 0.2 to 10 wt.% based on the total weight of the composite material, of carbon particles as determined according to ISO 11358, wherein the carbon particles are selected from nanographene, carbon nanotubes or any combination thereof;

   the composite material is **characterized in that** it further comprises at least 0.08 wt.% based on the total weight of the composite material, of an atactic polypropylene resin.

2. The composite material according to claim 1, **characterized in that** has a hexane content of at most 0.2 wt.% based on the total weight of the atactic polypropylene, the hexane content being determined by TDA-GC analysis and/or **in that** the atactic polypropylene resin is present at a content ranging from 0.08 to 2.0 wt.% based on the total weight of the composite material; preferably from 0.09 to 1.5 wt.%; more preferably from 0.1 to 1.0 wt.%.

3. The composite material according to any one of the claims 1 or 2, **characterized in that**:

   - the polypropylene composition comprises from 5 to 100 wt.% of polypropylene post-consumer resin based on the total weight of the polypropylene composition; preferably from 50 to 85 wt.%, and/or
   - the carbon particles are carbon nanotubes, with preference, the composite material comprises from 1.0 to 4.0 wt.% of carbon nanotubes based on the total weight of the composite material, as determined according to ISO 11358, preferably from 1.2 to 3.7 wt.%, even more preferably from 1.5 to 3.5 wt.%.

4. The composite material according to any one of the claims 1 to 3, **characterized in that** the first crystalline polypropylene resin

   - is selected from a virgin polypropylene resin, a polypropylene post-consumer resin and a blend of a virgin polypropylene resin and a polypropylene post-consumer resin; and/or
   - comprises from 20 to 95 wt.% of polypropylene post-consumer resin based on the total weight of the first crystalline polypropylene resin; and/or
   - is or comprises a post-consumer resin; wherein the polypropylene post-consumer resin has an MI2 ranging from 5 to 30 g/10 min as determined according to ISO 1133 at 230 °C under a load of 2.16 kg; preferably from 7 to 20 g/10 min; and/or
   - is or comprises a post-consumer resin; wherein the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

5. The composite material according to any one of the claims 1 to 4, **characterized in that** the first crystalline polypropylene resin:

   - is an heterophasic polypropylene; and/or
   - has an MI2 ranging from 5 to 30 g/10 min as determined according to ISO 1133 at 230 °C under a load of 2.16 kg; and/or
   - is present in the composite material at a content ranging from 60 to 80 wt.% based on the total weight of the composite material.

6. The composite material according to any one of the claims 1 to 5, **characterized in that** the polypropylene composition comprises second crystalline polypropylene resin:

   - in a content ranging from 5 to 40 wt.% based on the total weight of the composite material; and/or

- wherein the second crystalline polypropylene resin is selected from a virgin polypropylene resin, a polypropylene post-consumer resin, and a blend of a virgin polypropylene resin and a polypropylene post-consumer resin; and/or
- wherein the second crystalline polypropylene resin comprises from 20 to 95 wt.% of polypropylene post-consumer resin based on the total weight of the second crystalline polypropylene resin; and/or
- wherein the second crystalline polypropylene resin is or comprises a post-consumer resin, and further wherein the polypropylene post-consumer resin has an MI2 ranging from 80 to 250 g/10 min as determined according to ISO 1133 at 230 °C under a load of 2.16 kg;
- wherein the second crystalline polypropylene resin is or comprises a post-consumer resin; and further wherein the polypropylene post-consumer resin is a blend of recycled polypropylene and recycled polyethylene, wherein the content of the recycled polyethylene is ranging from 3 to 20 wt.% relative to the total weight of the polypropylene post-consumer resin.

7. The composite material according to any one of the claims 1 to 6, the polypropylene composition comprising a second crystalline polypropylene resin, the composite material is **characterized in that** the second crystalline polypropylene resin is a propylene homopolymer, and/or **in that** the second crystalline polypropylene resin has an MI2 ranging from 80 to 250 g/10 min as determined according to ISO 1133 at 230 °C under a load of 2.16 kg.

8. Process to produce a composite material according to any one of claims 1 to 7, **characterized in that** it comprises the steps of:

   a) providing a first crystalline polypropylene resin having a melt index MI2 ranging from 5 to 30 g /10 min as determined according to ISO 1133 at 230 °C under a load of 2.16 kg;
   b) providing a carbon particles-PP masterbatch comprising a blend of:

   - at least 5.0 wt.% of carbon particles as determined according to ISO 11358 and based on the total weight of said masterbatch; wherein the carbon particles are selected from nanographene, carbon nanotubes or any combination thereof; and
   - a second crystalline polypropylene resin having an MI2 ranging from 80 to 250 g/10 min as determined according to ISO 1133 at 230 °C under a load of 2.16 kg;

   c) providing an atactic polypropylene resin; and
   d) dry blending the components to obtain a composite material wherein the composite material comprises at least 0.08 wt.% based on the total weight of the composite material of the atactic polypropylene resin, and from 0.2 to 10 wt.% based on the total weight of the composite material of carbon particles.

9. Process to produce a composite material according to any one of claims 1 to 7, **characterized in that** it comprises the steps of:

   a) providing a first crystalline polypropylene resin having a melt index MI2 ranging from 5 to 30 g/10 min as determined according to ISO 1133 at 230 °C under a load of 2.16 kg;
   b) providing a carbon particles-PP masterbatch comprising a blend of:

   - at least 5.0 wt.% of carbon particles as determined according to ISO 11358 and based on the total weight of said masterbatch; wherein the carbon particles are selected from nanographene, carbon nanotubes or any combination thereof;
   - a second crystalline polypropylene resin having an MI2 ranging from 80 to 250 g/10 min as determined according to ISO 1133 at 230 °C under a load of 2.16 kg; and
   - from 1.0 wt.% to 20 wt.% of an atactic polypropylene resin;

   d) dry blending the components to obtain a composite material wherein the composite material comprises at least 0.08 wt.% based on the total weight of the composite material of the atactic polypropylene resin, and from 0.2 to 10 wt.% based on the total weight of the composite material of carbon particles.

10. Conductive article produced from the composite material according to any one of claims 1 to 7 or from the composite material obtained from the process according to claims 8 or 9; with preference

    - the conductive article is produced by a process selected from extrusion, injection, co-injection moulding, blow moulding, and thermoforming, and/or
- the conductive article has a surface resistance of at most $1.10^7$ Ohm as measured according to IEC 61340-4-1 with an SRM110 meter, preferably of at most $5.10^6$ Ohm.

11. Process to produce a conductive article according to claim 10, **characterized in that** it comprises the steps of:

- producing a composite material according to the process of claim 8 or 9,
- forming a conductive article by extrusion or injection of the composite material;

with preference, the step of dry blending the components to obtain a composite material and the step forming a conductive article are conducted simultaneously in a single step.

12. Use of atactic polypropylene resin in a process to produce a composite material comprising polypropylene and carbon particles; or in a process to produce a conductive article made from a composite material comprising polypropylene and carbon particle; wherein the carbon particles are selected from nanographene, carbon nanotubes or any combination thereof; the use is **characterized in that** the content of the atactic polypropylene resin is ranging from 0.08 to 2.0 wt.% based on the total weight of the composite material; with preference, the composite material comprises from 0.2 to 10 wt.% of carbon particles as determined according to ISO 11358.

13. Masterbatch for the production of a composite material according to any one of claims 1 to 7 and/or for use in a process according to claim 9; **characterized in** the masterbatch comprises a blend of:

- at least 5.0 wt.% of carbon particles as determined according to ISO 11358 and based on the total weight of said masterbatch; wherein the carbon particles are selected from nanographene, carbon nanotubes or any combination thereof;
- a second crystalline polypropylene resin having an MI2 ranging from 80 to 250 g/10 min as determined according to ISO 1133 at 230 °C under a load of 2.16 kg; and
- from 1.0 wt.% to 20 wt.% of an atactic polypropylene resin based on the total weight of the masterbatch;

with preference, the second crystalline polypropylene resin is a propylene homopolymer.

14. Process to produce a masterbatch according to claim 13; **characterized in that** it comprises the steps of:

- providing carbon nanotubes,
- providing an atactic polypropylene,
- providing a second crystalline polypropylene resin having a melting temperature, Tm, measured according to ISO 3146, and wherein said second crystalline polypropylene resin has a melt index MI2 ranging from 80 to 250 g/10 min as determined according to ISO 1133 at 230 °C under a load of 2.16 kg,
- blending together the components by extrusion in an extruder comprising a transport zone and a melting zone maintained at a temperature comprised between Tm + 1 °C and Tm + 50 °C, preferably, between Tm + 5 °C and Tm + 30 °C.

15. Use of atactic polypropylene resin in a process to produce a masterbatch comprising polypropylene and carbon particles wherein the carbon particles are selected from nanographene, carbon nanotubes or any combination thereof; the use is **characterized in that** the content of the atactic polypropylene resin is ranging from 1.0 wt.% to 20 wt.% of an atactic polypropylene resin based on the total weight of the masterbatch; with preference, the masterbatch comprises at least 5.0 wt.% of carbon particles as determined according to ISO 11358 and based on the total weight of said masterbatch.

Europäisches
Patentamt

European
Patent Office

Office européen
des brevets

**EUROPEAN SEARCH REPORT**

Application Number

EP 19 21 8381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/044485 A1 (ROUSSEAUX DIMITRI [BE] ET AL) 15 February 2018 (2018-02-15) * examples E2, CE2; tables 1, 2 * | 1-11 | INV. C08L23/12 |
| A | EP 1 349 179 A1 (ATOFINA RES [BE]) 1 October 2003 (2003-10-01) * claims 1, 3 * | 1-11 | |
| A | Nanocyl: "Technical Data Sheet: PLASTICYL(TM) PP2001 ¦ 8 th November 2016 ¦ V10 PLASTICYL TM PP2001 Polypropylene - carbon nanotubes masterbatches General Information", 8 November 2016 (2016-11-08), XP055677989, Retrieved from the Internet: URL:http://www.nanocyl.com/wp-content/uploads/2016/11/TDS-PLASTICYL-PP2001-V10.pdf [retrieved on 2020-03-19] * page 3 * | 1-11 | |
| A | KR 2018 0036389 A (LOTTE CHEMICAL CORP [KR]) 9 April 2018 (2018-04-09) * examples 1-2; table 1 * | 1-11 | TECHNICAL FIELDS SEARCHED (IPC) C08L |
| A | KR 2016 0049407 A (LOTTE CHEMICAL CORP [KR]) 9 May 2016 (2016-05-09) * examples 1-12 * | 1-11 | |

~~The present search report has been drawn up for all claims~~

| Place of search | Date of completion of the search | Examiner |
|---|---|---|
| Munich | 19 March 2020 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 19 21 8381

The Search Division considers that the present European patent application does not comply with the requirements of unity of invention and relates to several inventions or groups of inventions, namely:

1. claims: 1-12

   A composite material comprising- 80 to 99 wt% crystalline polypropylene resin- 0.2 to 10 wt% carbon particles- at least 0.08 wt% atactic polypropylene resin.

   ---

2. claims: 12-15

   A masterbatch comprising- a crystalline propylene homopolymer resin having an MI2 ranging from 80 to 250 g/10 min- at least 5.0 wt.% of carbon particles- 1.0 to 20 wt% atactic polypropylene resin.

   ---

## ANNEX TO THE EUROPEAN SEARCH REPORT
## ON EUROPEAN PATENT APPLICATION NO.

EP 19 21 8381

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2020

| Patent document cited in search report | | Publication date | Patent family member(s) | | Publication date |
|---|---|---|---|---|---|
| US 2018044485 | A1 | 15-02-2018 | BR | 112017019417 A2 | 02-05-2018 |
| | | | CA | 2976850 A1 | 15-09-2016 |
| | | | CN | 107428952 A | 01-12-2017 |
| | | | EP | 3268416 A1 | 17-01-2018 |
| | | | JP | 2018507940 A | 22-03-2018 |
| | | | KR | 20170129178 A | 24-11-2017 |
| | | | PH | 12017501600 A1 | 12-02-2018 |
| | | | SG | 11201707175X A | 30-10-2017 |
| | | | US | 2018044485 A1 | 15-02-2018 |
| | | | US | 2020148840 A1 | 14-05-2020 |
| | | | WO | 2016142544 A1 | 15-09-2016 |
| EP 1349179 | A1 | 01-10-2003 | AT | 543778 T | 15-02-2012 |
| | | | AT | 543779 T | 15-02-2012 |
| | | | AU | 2003222760 A1 | 29-09-2003 |
| | | | CN | 1643620 A | 20-07-2005 |
| | | | CN | 101081902 A | 05-12-2007 |
| | | | DK | 1485924 T3 | 17-12-2012 |
| | | | DK | 2031602 T3 | 27-02-2012 |
| | | | DK | 2144254 T3 | 05-03-2012 |
| | | | EP | 1349179 A1 | 01-10-2003 |
| | | | EP | 1485924 A1 | 15-12-2004 |
| | | | EP | 2028662 A2 | 25-02-2009 |
| | | | EP | 2031602 A2 | 04-03-2009 |
| | | | EP | 2144254 A2 | 13-01-2010 |
| | | | ES | 2378908 T3 | 19-04-2012 |
| | | | ES | 2378928 T3 | 19-04-2012 |
| | | | ES | 2520894 T3 | 12-11-2014 |
| | | | JP | 4463563 B2 | 19-05-2010 |
| | | | JP | 5182881 B2 | 17-04-2013 |
| | | | JP | 2005520889 A | 14-07-2005 |
| | | | JP | 2009120836 A | 04-06-2009 |
| | | | KR | 20040098015 A | 18-11-2004 |
| | | | KR | 20100070360 A | 25-06-2010 |
| | | | KR | 20110007257 A | 21-01-2011 |
| | | | PT | 2031602 E | 19-03-2012 |
| | | | PT | 2144254 E | 19-03-2012 |
| | | | US | 2006001013 A1 | 05-01-2006 |
| | | | US | 2009221782 A1 | 03-09-2009 |
| | | | WO | 03079375 A1 | 25-09-2003 |
| KR 20180036389 | A | 09-04-2018 | NONE | | |
| KR 20160049407 | A | 09-05-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016142544 A

**Non-patent literature cited in the description**

- Plastics Additives Handbook. Hanser Publishers, 2001
- **G.J. RAY et al.** *Macromolecules,* 1977, vol. 10 (4), 773-778
- **A. RAZAVI.** *Macromol. Symp.,* vol. 89, 345-367
- **KRAUSE et al.** *Carbon,* 2011, vol. 49, 1243-1247